Europäisches Patentamt

(19) European Patent Office

Office européen des brevets

(11) Numéro de publication : **0 050 573**
**B1**

(12) # FASCICULE DE BREVET EUROPÉEN

(45) Date de publication du fascicule du brevet :
03.12.86

(51) Int. Cl.⁴ : **F 16 D 65/56**, B 60 T 17/08

(21) Numéro de dépôt : **81401645.7**

(22) Date de dépôt : **20.10.81**

54 **Cylindre de frein à deux pistons.**

(30) Priorité : **21.10.80 FR 8022449**

(43) Date de publication de la demande :
**28.04.82 Bulletin 82/17**

(45) Mention de la délivrance du brevet :
**03.12.86 Bulletin 86/49**

(84) Etats contractants désignés :
**AT BE CH DE GB IT LI NL SE**

(56) Documents cités :
**FR-A- 2 011 416**
**FR-A- 2 445 251**

(73) Titulaire : **WABCO WESTINGHOUSE EQUIPEMENTS**
**FERROVIAIRES**
**2 boulevard Westinghouse**
**F-93270 Sevran (Seine-Saint-Denis) (FR)**

(72) Inventeur : **Dalibout, Georges**
**44 rue Jules Guesde**
**F-93220 Gagny (FR)**

(74) Mandataire : **Hirsch, Marc-Roger**
**Cabinet Hirsch 34 rue de Bassano**
**F-75008 Paris (FR)**

## Description

La présente invention se rapporte à un cylindre de frein à fluide sous pression et à ressort du type comportant un piston de service actionné par le fluide sous pression et un piston de frein à ressort (pour le frein de parc et/ou de secours) maintenu en position desserrée par la pression du fluide agissant à l'encontre de la force de réaction du ressort.

Les freins à ressort sont bien connus et notamment les dispositifs de freinage du type comportant un frein de service à air comprimé combiné avec un frein à ressort maintenu desserré par une pression d'air comprimé pendant la marche du véhicule. Indépendamment du risque de déclenchement intempestif du frein à ressort en cas de rupture du flexible d'alimentation du cylindre à ressort, l'inconvénient principal de ces freins combinés, qui par ailleurs présentent une excellente modérabilité pour le frein de service, réside dans le fait que l'effort de réaction du ressort qui applique le frein de parc et de secours, diminue rapidement lors de la course de détente du ressort. Cette course présente souvent des valeurs importantes pour rattraper : les jeux inévitables existant dans la timonerie de freinage et entre les garnitures et les pistes de freinage, ainsi que l'élasticité de la timonerie de freinage sous l'effet des efforts d'application importants de ces garnitures sur les pistes. On constate ainsi dans de nombreux cas qu'après plusieurs années de service des freins à ressort, l'effort de réaction du ressort, diminué par la corrosion et le fluage de l'acier à ressort resté sous contrainte au cours du temps, n'atteint plus, en position de freinage, que des valeurs comprises entre la moitié et le tiers de l'effort de réaction initial maximal calculé.

Pour pallier ces inconvénients, il apparaît que l'on peut soit éviter de maintenir le ressort sous contrainte, ce qui a déjà été réalisé et présente divers inconvénients pour la sécurité du freinage de secours, soit prendre des dispositions pour limiter la course de détente du ressort lorsqu'il applique le frein de parc et/ou de secours.

Un dispositif selon le préambule de la revendication 1 limitant la course de détente du ressort a été décrit dans FR-A-2 445 251.

L'objet de la présente invention est de réaliser un cylindre de frein comportant un piston de frein de service et un piston de frein à ressort agissant sur une même timonerie de freinage par l'intermédiaire d'un régleur de jeu commun aux deux pistons, le tout étant rassemblé en un ensemble compact, fiable et économique.

A cet effet, l'invention est caractérisée en ce qu'un deuxième écrou, dit l'écrou de rattrapage, d'un régleur de jeu du piston de frein de service pour régler le jeu entre les garnitures de frein et les pistes de freinage, est également vissé sur la tige filetée et est solidaire, au moins en position d'actionnement des freins, d'une bielle de poussée reliée aux leviers de freinage et la tige filetée d'une part, est solidaire d'une deuxième surface de transmission et de verrouillage sur laquelle est susceptible de venir en appui une deuxième surface conjuguée du piston de frein de service lorsqu'il est actionné et, d'autre part, est repoussée par un ressort de rappel en direction du piston de frein de service, le recul du deuxième écrou après une application du frein étant limité à une valeur dite de jeu normal, inférieure à la course maximale possible du frein de service, par l'intermédiaire de butées mobiles telles que des segments frotteurs serrés sur ce deuxième écrou, de telle sorte qu'après un déplacement de ces butées mobiles sur le deuxième écrou, le retour du piston de frein de service vers sa position inactive désolidarise la deuxième surface de transmission et de verrouillage de la deuxième surface conjuguée de ce piston de frein de service et que le ressort de rappel de la tige filetée l'entraîne vers le piston de frein de service (en butée) en provoquant la rotation de celle-ci par rapport au deuxième écrou. La tige filetée à pas réversible qui doit être réalisée avec soin et en un matériau résistant tel que l'acier cémenté et trempé, coopère ainsi avec deux écrous de fonctions différentes ce qui améliore la fiabilité des mécanismes du cylindre et en diminue le coût.

Selon un autre mode de réalisation de l'invention, le piston de frein de service est immobilisé en rotation par rapport au corps du cylindre à l'aide d'au moins une broche traversant la paroi de séparation entre la chambre contenant le ressort de rappel de la tige filetée et la chambre contenant le ressort d'actionnement du piston de frein à ressort. Cette paroi de séparation présente deux renflements annulaires concentriques qui servent d'appui, l'un au ressort de rappel du piston de frein de service, l'autre, du côté opposé au piston de frein de service, au ressort du piston de frein à ressort.

L'immobilisation en rotation du piston de frein de service améliore le verrouillage du régleur en position de repos du cylindre qui peut être soumis à des vibrations intenses.

Lorsque la première surface de transmission portée par le piston à ressort est solidaire d'un manchon tournant librement par rapport à ce piston mais verrouillé en rotation par rapport au corps du cylindre par l'intermédiaire d'un crabotage constitué d'une couronne de verrouillage munie de dents ou de crabots et coopérant avec une autre couronne de même type solidaire en rotation du corps du cylindre et repoussée par un autre ressort de rappel en direction de la couronne de verrouillage, un levier de desserrage manuel articulé sur le corps du cylindre, est susceptible de venir en appui sur un épaulement de déverrouillage et de le repousser au contact de l'autre couronne pour provoquer à l'encontre de l'autre ressort de rappel de cette autre couronne, le déverrouillage en rotation des dents ou crabots de la couronne de verrouillage par rapport à l'autre couronne et libérer ainsi le manchon en rotation pour autoriser alors la rotation du manchon en appui sur le premier écrou et, par voie de conséquence, la détente du ressort et, par suite de la libre rotation de ce premier écrou sur la tige filetée solidaire du piston de service soumis à l'effort de réaction de la timonerie de freinage, le desserrage manuel du frein à ressort.

Selon une autre disposition importante de l'invention, le crabotage entre les deux couronnes de verrouillage est unidirectionnel et provoque l'immobilisation en rotation du manchon dans le sens assurant l'entraînement du premier écrou par le piston à ressort, tandis que la denture à cliquet d'au moins l'une des couronnes autorise la rotation du manchon dans l'autre sens en repoussant l'autre ressort de rappel de l'autre couronne pour permettre le recul du piston à ressort sous l'action de la pression de desserrage avec mise en rotation du premier écrou dans les phases où ce premier écrou et le manchon sont solidaires au moins en rotation.

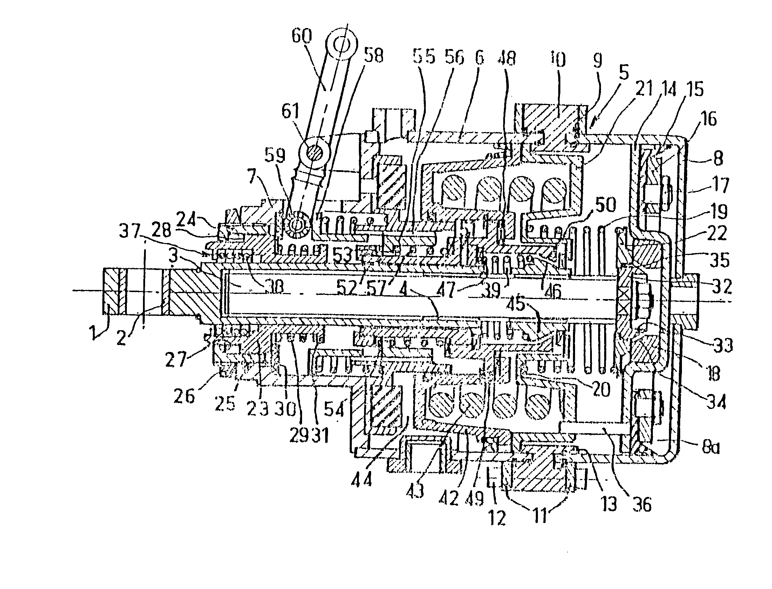

D'autres buts, avantages et caractéristiques de la présente invention apparaîtront à la lecture de la description qui va suivre, faite en regard du dessin annexé où la figure unique est une section transversale du cylindre de frein selon l'invention.

Le cylindre de frein selon l'invention comprend une bielle de poussée 1 pourvue en bout d'une chape munie d'un œil 2 permettant le rattachement aux leviers de freinage. A l'intérieur du cylindre de frein (5), la bielle 1 est creuse et reçoit une tige filetée 3 à pas réversible qui coopère par ses filets avec un deuxième écrou 4 solidaire de la bielle 1. La bielle 1 et la tige filetée 3 font partie d'un cylindre de frein 5 dont le corps se compose d'une virole 6, fermée par un couvercle 7 et d'un fond cylindrique 8 rapporté sur la virole 6 au moyen de joncs 9, d'une couronne 10 et de deux anneaux 11 serrés par des boulons 12, le tout étant rendu étanche par des joints coopérant avec la partie 13 de la couronne 10 faisant saillie à l'intérieur du cylindre. Un piston de frein de service 14 monté mobile à l'intérieur de l'alésage du fond 8 du corps est muni d'une garniture d'étanchéité 15 maintenue de façon convenable par exemple au moyen d'une couronne 16 fixée par des boulons 17. La partie centrale du piston présente un renflement dirigé vers le raccord d'alimentation du cylindre et renforcé du côté opposé par une bague 18 munie d'une portée conique.

Un ressort hélicoïdal 19 de rappel du piston 14 en position inactive est monté en appui entre un épaulement 20 d'une paroi de séparation 21 délimitant la chambre de respiration du cylindre de frein de service et respectivement un anneau 22 en contact avec la bague 18.

Un manchon d'arrêt 23 axialement mobile est monté sur la bielle de poussée 1 entre une douille d'arrêt réglable 24 vissée dans un alésage 25 du couvercle 7 à l'aide d'un contre-écrou 26, et une bague d'appui 30. La douille d'arrêt 24 présente un rebord annulaire 27 servant d'appui à un épaulement correspondant 28 ménagé sur le manchon d'arrêt 23.

Le manchon 23 est repoussé vers la droite de la figure par un ressort de rappel 29 disposé entre la bague 30 en appui sur le couvercle et une bride 31 solidaire du manchon 23.

Une tête d'embrayage 32 est montée sur l'extrémité droite de la tige filetée 3. Cette tête 32 comporte une surface conique 33 susceptible de venir en contact avec une surface conique correspondante 34 de la bague 18 solidaire du piston de service 14, et un épaulement 35 sur lequel l'anneau 22 vient en appui. En position de repos telle que représentée sur la figure, les surfaces coniques 33 et 34 sont éloignées l'une de l'autre tandis que l'épaulement 35 est en appui sur l'anneau 22. Le piston de frein de service 14 est immobilisé en rotation par rapport au corps du cylindre à l'aide d'au moins une broche 36 traversant la paroi de séparation 21. Un jeu de segments 37 est porté par le manchon d'arrêt 23 et vient serrer la surface extérieure polie de la bielle de poussée pour s'opposer en réaction au déplacement axial de cette bielle 1 par rapport au manchon 23. Ces segments 37 peuvent par exemple comporter chacun un ressort annulaire 38 précontraint qui vient serrer énergiquement un anneau fendu monté sur la bielle 1. Tous moyens tel qu'un soufflet peuvent être prévus à la sortie de la bielle 1 pour empêcher l'entrée de polluants extérieurs dans le jeu de segments frotteurs 37.

Un piston de frein à ressort 42 logé à l'intérieur de la virole 6 du cylindre de freinage 5 est soumis du côté droit de la figure à la réaction d'un puissant ressort précontraint 43 en appui sur la paroi de séparation 21 et du côté gauche de la figure, à la pression de fluide admise dans une chambre de frein à ressort 44.

Pour assurer le couplage mécanique entre le frein de service et le frein de parc, un premier écrou 45 portant un cône 46 et taraudé au même pas réversible que l'écrou 4, est vissé sur la tige filetée 3. L'écrou 45 est repoussé en direction du piston de service 14 dans une position axiale fixe contre la paroi 21 par l'action d'un ressort 39 en appui sur une butée à billes 47. Le piston 42 du cylindre à ressort est solidaire, par l'intermédiaire d'un roulement de butée 48, d'un manchon 49, muni d'une première surface de transmission, dite cône 50, et rendu solidaire par une goupille 51 d'un second manchon 52 muni d'un crabotage 53 en prise unidirectionnelle avec un crabotage correspondant 54 d'un manchon 55 coulissant dans des cannelures 56 solidaires du corps du couvercle 7 du cylindre 5. Le manchon 55 est repoussé en direction du crabotage 53 du manchon 52 par un ressort de rappel 57.

Le bloc de freinage qui vient d'être décrit fonctionne de la façon qui va maintenant être explicitée :

En service normal du véhicule ferroviaire équipé de cylindres de frein selon l'invention, la chambre 44 du frein de parc est alimentée en air comprimé à une pression suffisante pour repousser le piston à ressort 42 vers la droite en butée sur le fond du cylindre (de la paroi de séparation 21). Au serrage du frein de service, la chambre de frein de service 8a du cylindre 8 est alimentée en air comprimé et le piston de service 14 est repoussé vers la gauche de la figure à l'encontre du ressort de rappel 19.

La distance entre le rebord 28 et la butée 27 est alors égale au jeu théorique du frein régulé par le régleur du cylindre de frein. La valeur de ce jeu peut être ajustée sur le régleur en faisant tourner la douille filetée 24 après desserrage du contre-écrou 26 et en bloquant à nouveau le contre-écrou 26 sur la douille 24.

Dès le début de sa course vers la gauche de la figure, la bague 18 repousse l'anneau 22 et sa surface conique 34 s'applique sur la surface conique 33 pour la solidariser en rotation avec le piston de service 14 immobilisé en rotation par les broches 36.

La tige filetée 3 immobilisée en rotation par le coincement des cônes 33 et 34 se déplace vers la gauche en entraînant par son filetage l'écrou 4 et la bielle 1 jusqu'à ce que l'épaulement 28 du manchon 23 vienne en appui sur le rebord 27. A cet instant, les freins sont normalement appliqués puisque les jeux éventuels apparus au freinage précédent ont été rattrapés. Si le freinage se poursuit et qu'une usure sensible des sabots ou garnitures de frein et des pistes de freinage se manifeste, pour appliquer les freins à pleine puissance, la bielle 1 doit effectuer une course supplémentaire sous l'action du piston 14 soumis à la pression pneumatique régnant dans la chambre 8a. Pendant cette course supplémentaire, le manchon 23 et les segments 37 qu'il porte sont immobilisés en translation et la surface extérieure de la bielle 1 glisse avec frottement sous les segments 37.

Pendant le déplacement du piston de frein de service 14 vers la gauche, le piston à ressort n'entrave pas le fonctionnement du piston de service car le filetage réversible de la vis 3 entraîne en rotation l'écrou 45 maintenu en position axiale fixe et en appui sur un roulement à aiguille par la réaction du ressort 39.

Au desserrage du frein de service, la chambre de frein de service 8a est reliée à l'échappement par un distributeur de pression de freinage et le piston de service 14 est repoussé vers la droite de la figure par son ressort de rappel 19 en entraînant en rotation en sens inverse l'écrou 45 toujours maintenu en position axiale fixe sur des roulements par le ressort 39. Après une course de desserrage correspondant au jeu normal, le manchon 23 vient en butée sur la bague 30 et immobilise par les segments 37 la bielle 1. Le ressort de rappel 19 repousse alors le piston 14 vers la droite par l'intermédiaire de l'anneau 22 et désolidarise les surfaces coniques 33 et 34. La tige filetée 3 est alors repoussée vers la droite par le ressort 19 et elle se met en rotation par rapport à l'écrou 4 pour rattraper le jeu supplémentaire apparu par suite de l'usure des sabots de frein. La rotation de la vis 3 se poursuit jusqu'à ce que le piston de service 14 vienne en butée, par son renflement central, sur le fond du cylindre 8 et que l'anneau 22 vienne en appui sur la bague 18.

L'anneau 22 est également en appui direct sur la tête d'embrayage 32 solidaire en rotation de la tige filetée 3 et il immobilise celle-ci en rotation par un effet de friction tout en maintenant les surfaces coniques 33 et 34 à distance l'une de l'autre. La rotation de la tige filetée 3 sous l'action de rappel du ressort 19 a ainsi rattrapé le jeu supplémentaire apparu au cours du freinage. Pour donner du jeu à la timonerie de freinage actionnée par la bielle 1, on peut repousser celle-ci en direction du piston de service 14 à l'encontre des segments 37 et la tige filetée 3, en appui sur l'anneau 22, entre en rotation.

L'application du frein de parc ou de secours à ressort s'effectue après un serrage des freins par le frein de service à la pression maximale, de façon à rattraper tous les jeux ainsi que la course élastique de la timonerie et de tous les organes soumis aux efforts d'application des freins.

Pour appliquer le frein d'immobilisation, la valve de contrôle du frein de parc réduit alors la pression dans la chambre 44 en la reliant à l'échappement, ce qui permet au piston 42, poussé par le ressort 43, de se déplacer vers la gauche. Après la prise de contact entre les deux cônes 46 et 50, l'effort de réaction du ressort 43 se transmet à l'écrou 45 immobilisé en rotation et par les filets de la vis 3 immobilisée à son tour en rotation, à l'écrou 4 et à la bielle 1.

Le manchon 55 repoussé par le ressort 57 empêche par ses cannelures 56 la rotation de la pièce porte-cône 49, rendue solidaire de la vis 3 par l'accouplement des cônes 46 et 50. On peut alors desserrer le frein pneumatique car le frein d'immobilisation à ressorts s'applique comme frein de parc de puissance sensiblement équivalente à celle du frein de service à sa pression maximale.

Le desserrage du frein à ressort s'opère en faisant remonter la pression régnant dans la chambre 44. Le piston à ressort 42 refoule alors les cônes accouplés 46 et 50 vers la droite ainsi que l'écrou 45 jusqu'à l'instant où la tige 3 arrête son déplacement vers la droite. Le piston à ressort 42 continue seul sa course jusqu'à sa butée de droite et les cônes 46 et 50 se désolidarisent.

En cas de vidange intempestive de la chambre de frein à ressort, par exemple par suite d'une défaillance de son flexible d'alimentation, le piston à ressort 42 se déplace vers la gauche, rattrape le jeu entre les cônes 46 et 50 et les applique l'un sur l'autre puis entraîne vers la gauche l'écrou 45 alors solidaire de la tige filetée 3. Le manchon 55 coulisse dans les cannelures 56 également vers la gauche sous l'action du ressort 57 mais vient en butée sur un manchon 58 lui-même en appui sur un galet 59 d'un levier de desserrage manuel 60 du frein à ressort, avant que le piston 42 n'ait pu appliquer les semelles de frein sur la surface de freinage. Les crabotages 53 et 54, en prise unidirectionnelle, se désolidarisent et le piston 42 continue sa course jusqu'à sa butée de gauche sur le corps du cylindre 5. La pièce porte-cône 49 n'étant plus immobilisée en rotation par le manchon 55, la tige filetée 3 se met à tourner avec l'écrou 45 par suite de la réaction de la bielle 1 vers la droite jusqu'à ce que le piston 14 vienne en appui contre sa butée de droite au fond du cylindre 8 et que la bielle 1 ne reçoive plus d'effort de réaction vers la droite.

Le réarmement du frein à ressort, après un fonctionnement intempestif du frein d'immobilisation, s'effectue automatiquement en remettant sous pression la chambre à ressort 44 (normalement après réparation de son circuit d'alimentation). Le piston 42 est refoulé vers sa butée de droite et l'appui de l'écrou 45, par sa butée à aiguilles, sur la paroi de séparation 21 désolidarise les cônes 46 et 50.

Le frein d'immobilisation ainsi réarmé est prêt pour une nouvelle utilisation. En cas de nécessité, le desserrage manuel du frein d'immobilisation s'opère de la façon qui va être décrite :

Le frein d'immobilisation ayant été serré, la chambre à ressort 44 est reliée à l'atmosphère et l'effort de réaction du ressort 43 s'est substitué à la pression pneumatique agissant en service sur le piston de service 14. Le véhicule étant immobilisé en position freinée et sans source d'air pour desserrer le frein d'immobilisation par voie pneumatique, on exerce une traction manuelle sur le levier 60 qui pivote autour de son axe d'articulation 61 solidaire du couvercle 7 et repousse le galet 59 vers la droite de la figure. Sous la poussée du galet 59, le manchon 58 se déplace vers la droite jusqu'au moment où il entre en contact avec le manchon 55 qui coulisse dans ses cannelures 56 et décrabote les crabotages 53 et 54. Sous l'effet de l'effort de réaction de la timonerie de freinage qui repousse la bielle 1 vers la droite, la pièce porte-cône 49, alors solidaire de l'écrou 45, se met en rotation pour autoriser le piston à ressort 42 à venir en appui sur sa butée de gauche et la tige filetée 3 à tourner pour permettre le recul du piston 14 jusqu'à sa butée sur le fond du cylindre 8. Dès que l'opérateur relâche sa traction sur le levier 60, le manchon 58 est rappelé vers la gauche de la figure par son ressort de rappel et les crabotages 53 et 54 reviennent en contact sous l'action du ressort 57. Pour réarmer le frein, il suffit de remettre sous pression la chambre 44 pour repousser le piston 43.

Au cours du déplacement du piston 42 vers la droite de la figure, l'écrou 45 peut tourner librement en entraînant la pièce 49 car le crabotage 53 glisse sur le crabotage 54 sans l'entraîner. En effet, la rotation de l'écrou 45 s'effectue en sens inverse de celui de l'application des freins et pour lequel les crabotages 53 et 54 n'entrent pas en prise sous la poussée du ressort 57 repoussé légèrement au passage de chaque dent du crabotage.

## Revendications

1. Cylindre de frein (5) à fluide sous pression et à ressort du type comportant un piston de frein de service (14) actionné par la pression du fluide et un piston de frein à ressort (42) pour le frein de part et/ou de secours maintenu en position desserrée par une pression de desserrage du fluide agissant à l'encontre de la force de réaction d'au moins un ressort (43) de frein à ressort, le piston de frein à ressort (42) étant susceptible de transmettre au piston de frein de service (14) tout ou partie de l'effort de réaction du ressort (43) par l'intermédiaire d'une première surface de transmission (50) portée par le piston de frein à ressort (42) et venant en appui sur un premier écrou dit écrou à filetage réversible (45), vissé sur une tige filetée (3) rendue solidaire du piston de frein de service (14), des moyens de rappel (39) étant prévus pour rappeler le premier écrou (45) sur une butée (20) sensiblement fixe par rapport au corps (6, 10) du cylindre de frein (5) et maintenir ainsi, indépendamment des déplacements axiaux du piston de frein de service (14), le premier écrou (45) à faible distance de la première surface de transmission (50), lorsque le piston de frein à ressort (42) est en position de recul sous l'action de la pression de desserrage, de telle sorte que le déplacement axial du piston de frein à ressort (42), à partir de sa position de recul et sous l'action du ressort (43), d'une valeur supérieure à ladite faible distance, provoque la mise en contact de la première surface de transmission (50) avec une première surface de contact conjuguée (46) du premier écrou (45) et le verrouillage axial de celui-ci par rapport à la tige filetée (3), caractérisé en ce qu'un deuxième écrou, dit écrou de rattrapage à pas réversible (4), d'un régleur de jeu (3, 19, 33, 34, 37) du piston de frein de service (14) pour régler le jeu entre les garnitures de frein et les pistes de freinage, est également vissé sur la tige filetée (3) et est solidaire, au moins en position d'actionnement des freins, d'une bielle de poussée (1) reliée aux leviers de freinage et en ce que la tige filetée (3), d'une part, est solidaire d'une deuxième surface de transmission et de verrouillage (33) sur laquelle est susceptible de venir en appui une deuxième surface conjuguée (34) du piston de frein de service (14) lorsqu'il est actionné et, d'autre part, est repoussée par un ressort de rappel (19) en direction du piston de frein de service, le recul du deuxième écrou (4) après une application du frein étant limité à une valeur dite de jeu normal inférieure à la course maximale possible du frein de service par l'intermédiaire de butées mobiles telles que des segments frotteurs (37) serrés sur ce deuxième écrou (4), de telle sorte qu'après un déplacement de ces butées mobiles sur le deuxième écrou (4), le retour du piston de frein de service (14) vers sa position inactive désolidarise la deuxième surface de transmission et de verrouillage (33) de la deuxième surface conjuguée (34) de ce piston de frein de service et que le ressort de rappel (19) de la tige filetée (3) l'entraîne vers le piston de frein de service (14) (en butée) en provoquant la rotation de celle-ci par rapport au deuxième écrou (4).

2. Cylindre de frein à fluide sous pression selon la revendication 1, caractérisé en ce que le piston de frein de service (14) est immobilisé en rotation par rapport au corps du cylindre (5) à l'aide d'au moins une broche (36) traversant la paroi de séparation (21) entre la chambre contenant le ressort de rappel (19) de la tige filetée (3) et la chambre contenant le ressort d'actionnement (43) du piston de frein à ressort (42).

3. Cylindre de frein selon l'une des revendications 1 ou 2, dans lequel la première surface de transmission (50) portée par le piston à ressort (42) est solidaire d'un manchon (49) tournant librement par rapport à ce piston (42) mais verrouillé en rotation par rapport au corps (6, 10) du cylindre (5) par l'intermédiaire d'un crabotage constitué d'une couronne de verrouillage (52) munie de dents ou de crabots (53) et coopérant avec une autre couronne (55) de même type solidaire en rotation du corps (6, 10) du cylindre (5) et repoussée par un autre ressort de rappel (57) en direction de la couronne de verrouillage (52), caractérisé en ce qu'un levier de desserrage manuel (60) articulé sur le corps (6, 10) du cylindre, est susceptible de venir en appui sur un épaulement de déverrouillage (58) et de le repousser au contact de l'autre couronne (55) pour provoquer à l'encontre de l'autre ressort de rappel (57) de cette autre couronne (55) le déverrouillage en rotation des dents ou crabots (53) de la couronne de verrouillage (52) par rapport à l'autre couronne (55) et libérer ainsi le manchon (49) en rotation pour autoriser alors la rotation du manchon (49) en appui sur le premier écrou (45) et, par voie de conséquence, la détente du ressort (43) de frein à ressort et, par suite de la libre rotation de ce premier écrou (45) sur la tige filetée (3) solidaire du piston de service (14) soumis à l'effort de réaction de la timonerie de freinage, le desserrage manuel du frein à ressort.

4. Cylindre de frein selon la revendication 3, caractérisé en ce que le crabotage (53, 54) entre les deux couronnes de verrouillage (52, 55) est unidirectionnel et provoque l'immobilisation en rotation du manchon (49) dans le sens assurant l'entraînement du premier écrou (45) par le piston à ressort (42), tandis que la denture à cliquet (53 ou 54) d'au moins l'une des couronnes (52 ou 55) autorise la rotation du manchon (49) dans l'autre sens en repoussant l'autre ressort de rappel (57) de l'autre couronne (55) pour permettre le recul du piston à ressort (42) sous l'action de la pression de desserrage avec mise en rotation du premier écrou (45) dans les phases où ce premier écrou (45) et le manchon (49) sont solidaires au moins en rotation.

## Claims

1. Pressurized fluid and spring actuated brake cylinder (5) of the type comprising a service brake piston (14) actuated by the pressure of the fluid and a spring brake piston (42) for the parking and/or emergency brake, which is maintained in the released position by a releasing pressure of the fluid acting against the reaction force of at least one spring brake spring (43), the spring brake piston (42) being adapted to transmit to the service brake piston (14) all or part of the reaction force of the spring (43) through the intermediary of a first transmission surface (50) carried by the spring brake piston (42) and bearing on a first nut (45) having a reversible screw-thread which is screwed onto a threaded spindle (3) integrally connected to the service brake piston (14), return means (39) being provided for returning the first nut (45) onto a stop (20) substantially fixed with respect to the body (6, 10) of the brake cylinder (5) and thus maintaining, independently of the axial displacements of the service brake piston (14), the first nut (45) at a small distance from the first transmission surface (50) when the spring brake piston (42) is brought into the retracted position by the action of the releasing pressure, in such a manner that the axial displacement of the spring brake piston (42), from its retracted position and under the action of the spring (43), over a length greater than said small distance, brings the first transmission surface (50) into engagement with a first mating contact surface (46) of the first nut (45) and initiates the axial locking thereof with respect to the threaded spindle (3), characterized in that a second nut constituting a take-up nut (4) having a reversible screw thread, which is part of a clearance adjuster (3, 19, 33, 34, 37) of the service brake piston (14), adapted to adjust the clearance between the brake linings and the braking paths, is also screwed onto the threaded spindle (3) and is integral, at least in the actuating position of the brakes, with a push-rod (1) connected to the braking levers, and in that the threaded spindle (3), on the one hand, is integral with a second transmission and locking surface (33) onto which a second mating surface (34) of the service brake piston (14) is adapted to abut when it is actuated, said spindle being, on the other hand, pushed back by a return spring (19) toward the service brake piston, the return movement of the second nut (4) after a brake application being limited by the intermediary of movable stops such as friction segments (37) tightly mounted on said second nut (4) to a value of normal clearance which is lower than the possible maximum stroke length of the service brake, whereby after a displacement of these movable stops on the second nut (4) the return of the service brake piston (14) towards its inactive position disconnects the second transmission and locking surface (33) from the second mating surface (34) of this service brake piston, while the return spring (19) of the threaded spindle (3) displaces it toward the service brake piston (14) (in abutment) by causing it to rotate with respect to the second nut (4).

2. Pressurized fluid brake piston according to claim 1, characterized in that the service brake piston (14) is blocked in rotation with respect to the body of the cylinder (5) by means of at least one spindle (36) extending through the separation wall (21) between the chamber containing the return spring (19) of the threaded spindle (3) and the chamber containing the actuating spring (43) of the spring brake piston (42).

3. Brake cylinder according to any one of claims 1 and 2, wherein the first transmission surface (50) carried by the spring piston (42) is integral with a sleeve (49) rotating freely with respect to this piston (42), but prevented from rotating with respect to the body (6, 10) of the cylinder (5) through the intermediary of a dog clutch comprising a locking ring (52) provided with teeth or dogs and cooperating with another ring (55) of the same type which is integral in rotation with the body (6, 10) of the cylinder (5) and pushed back by another return spring (57) toward the locking ring (52), characterized in that a manually operated releasing lever (60) pivotally mounted on the body (6, 10) of the cylinder is adapted to engage an unlorking shoulder (58) and to push it into engagement with the other ring (55) so as to initiate against the other return spring (57) of said other ring (55) the inlocking in rotation of the teeth or dogs (53) of the locking ring (52) with respect to the other ring (55) and thus release in rotation the sleeve (49) so as to allow the sleeve (49) to rotate while bearing on the first nut (45) and consequently to initiate the release of the spring brake spring (43) and, due to the free rotation of the first nut (45) on the threaded spindle (3) integral with the service piston (14) subjected to the reaction force of the brake rigging, initiate the manual release of the spring brake.

4. Brake cylinder according to claim 3, characterized in that the dog clutch (53, 54) between the two locking rings (52, 55) are unidirectional and brings about the locking in rotation of the sleeve (49) in the direction ensuring the driving of the first nut (45) by the spring piston (42), while the pawl teeth (53 or 54) of at least one of the rings (52 or 55) allows the sleeve (49) to rotate in the other direction so as to push back the other return spring (57) of the other ring (55) for allowing the spring piston (42) to move backwards under the action of the releasing pressure, while rotating the first nut (45) during the phases wherein this first nut (45) and the sleeve (49) are integral at least in rotation.

**Patentansprüche**

1. Druckmedium- und federbeaufschlagter Bremszylinder (5) mit einem durch das Druckmedium betätigten Betriebsbremskolben (14) und einem Federbremskolben (42) für die Park- oder Hilfsbremse, die durch einen Bremslösedruck des Mediums gegen die Reaktionskraft wenigstens einer Feder (4) der Federbremse in der Bremslösestellung gehalten wird, wobei der Federbremskolben (42) derart angeordnet ist, dass er an den Betriebsbremskolben (14) wenigstens einen Teil der Reaktionskraft der Feder (43) unter Zwischenschaltung einer ersten Übertragungsfläche (50) übertragen kann, die an dem Federbremskolben (42) angeordnet ist und sich an einer ersten, mit Wendegewinde versehen und auf eine mit dem Betriebsbremskolben (14) fest verbundene Schraubenspindel (3) aufgeschraubten Schraubenmutter (45) abstützt, wobei Rückholmittel (39) vorgesehen sind zum Rückholen der ersten Schraubenmutter (45) zu einem in bezug auf den Körper (6, 10) des Bremszylinders (5) wesentlich ortsfesten Anschlag (20) und somit zum Halten der ersten Schraubenmutter (45) in einem geringen Abstand von der Übertragungsfläche (50), unabhängig von den axialen Bewegungen des Betriebsbremskolbens (14), wenn der Federbremskolben (42) sich infolge des Bremslösedrucks in seiner eingezogenen Lage befindet, derart, dass die axiale Bewegung des Federbremskolbens (42) von seiner eingezogenen Lage aus unter Einwirkung der Feder (43) über eine Länge, die grösser ist, als der genannte geringe Abstand, die Berührung zwischen der ersten Übertragungsfläche (50) und einer ersten entsprechenden Berührungsfläche (46) der ersten Schraubenmutter (45), sowie die axiale Verriegelung der letzteren in bezug auf die Gewindespindel (3) bewirkt, dadurch gekennzeichnet, dass eine zweite mit Wendegewinde versehene Nachstellschraubenmutter (4) eines zum Einstellen des Spielraums zwischen den Bremsbelägen und den Bremsbahnen dienenden Nachstellreglers (3, 19, 33, 34, 37) des Betriebsbremskolbens (14) ebenfalls auf die Gewindespindel (3) aufgeschraubt und wenigstens bei Betätigungsstellung der Bremsen mit einer mit den Bremshebeln verbundenen Stösselstange (1) fest verbunden ist, und dass die Gewindespindel (3) einerseits mit einer zweiten Übertragungs- und Verriegelungsfläche (33) fest verbunden ist, auf welcher sich eine zweite entsprechende Fläche (14) des Betriebsbremskolbens (34) abstützt, wenn derselbe betätigt wird, und dass die Gewindespindel andererseits durch eine Rückholfeder (19) in Richtung auf den Betriebsbremskolben beaufschlagt wird, wobei die Zurückbewegung der zweiten Schraubenmutter (4) nach Anlegen der Bremse auf einen sogenannten Normalspielraumswert begrenzt ist, welcher geringer ist, als die Maximalhublänge der Betriebsbremse, und zwar durch bewegliche Anschläge, wie auf diese zweite Schraubenmutter (4) aufgezwängte Reibungssegmente (37), derart, dass nach einer Verstellung dieser beweglichen Anschläge auf der zweiten Schraubenmutter (4) die Rückkehr des Betriebsbremskolbens (14) in seine Ruhelage die Trennung der zweiten Übertragungs- und Verriegelungsfläche (33) von der zweiten entsprechenden Fläche (34) dieses Betriebsbremskolbens bewirkt, und dass die Rückholfeder (19) der Schraubenspindel (3) deren Bewegung in Richtung auf den Betriebsbremskolben (14) (im Anschlag) dadurch bewirkt, dass sich sie dieselbe in bezug auf die zweite Schraubenmutter (4) dreht.

2. Druckmediumbremszylinder nach Anspruch 1, dadurch gekennzeichnet, dass der Betriebsbremskolben (14) in bezug auf den Zylinderkörper (5) vermittels wenigstens einer Stange (36) drehfest angeordnet ist, welche die Trennwandung (21) zwischen der die Rückholfeder (19) der Gewindespindel (3) enthaltenden Kammer und der die Federbremskolben (42) betätigenden Feder (43) enthaltenden Kammer durchquert.

3. Bremszylinder nach Anspruch 1 oder 2, bei dem die erste vom Federkolben (42) getragene Übertragungsfläche (50) mit einem Rohrstück (49) fest verbunden ist, das in bezug auf diesen Kolben (42) frei drehbar, jedoch in bezug auf den Körper (6, 10) des Zylinders gegen Verdrehen durch Verriegelungsmittel verriegelt ist, die einen mit Zähnen bzw. Fingern (53) versehenen Verriegelungskranz (52) aufweisen, der mit einem gleichartigen anderen Kranz (55) zusammenwirkt und durch eine andere Rückholfeder (57) in Richtung auf den Verriegelungskranz (52) beaufschlagt wird, dadurch gekennzeichnet, dass ein von Hand betätigter Entriegelungshebel (60) am Zylinderkörper (6, 10) angelenkt und dazu bestimmt ist, sich an einer Entriegelungsschulter (58) abzustützen und dieselbe mit dem anderen Kranz (55) in Berührung zu bringen, um gegen die Wirkung der anderen Rückholfeder (57) dieses anderen Kranzes (55) die Entriegelung der Zähne oder Riegel (53) des Verriegelungskranzes (52) in bezug auf den anderen Kranz (55) in Drehrichtung zu bewirken und somit die Drehung des Rohrstücks (49) zu gestatten, das sich auf der ersten Schraubenmutter abstützt, wodurch die Entspannung der Feder (43) der Federbremse und infolge der freien Drehung dieser ersten Schraubenmutter (45) auf der mit dem der Reaktionskraft des Bremsgestänges ausgesetzten Betriebskolben (14) fest verbundenen Gerwindespindel (3) die handbetätigte Lösung der Federbremse bewirkt wird.

4. Bremszylinder nach Anspruch 3, dadurch gekennzeichnet, dass die Verriegelungsmittel (53, 54) zwischen den beiden Verriegelungskränzen (52, 55) einsinnig wirken und das Rohrstück (49) in demjenigen Drehsinn am Verdrehen hindern, der die Mitnahme der ersten Schraubenmutter (45) durch den Federkolben (42) bewirkt, während die Sperrverzahnung (53 oder 54) wenigstens eines der Kränze (52 oder 55) es dem Rohrstück (49) gestattet, sich im anderen Drehsinn zu drehen und dabei die andere Rückholfeder (57) des anderen Kranzes (55) zurückzudrücken, damit der Federkolben (42) unter der Einwirkung der Bremslösedrucks bei gleichzeitiger Drehung der ersten Schraubenmutter (45) in denjenigen Betriebsphasen zurückweichen kann, während welcher diese erste Schraubenmutter (45) mit dem Rohrstück (49) wenigstens in Drehrichtung fest verbunden ist.